Europäisches Patentamt

European Patent Office

Office européen des brevets

(19)

(11) EP 1 441 540 A2

(12) **EUROPEAN PATENT APPLICATION**

(43) Date of publication:
28.07.2004 Bulletin 2004/31

(51) Int Cl.7: **H04N 13/00**

(21) Application number: 03029685.9

(22) Date of filing: 23.12.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **23.01.2003 IT to20030030**

(71) Applicant: **RAI RADIOTELEVISIONE ITALIANA (S.p.A.)**
**00195 Roma (IT)**

(72) Inventors:
• **Sacco, Bruno**
**10154 Torino (IT)**
• **Casalegno, Franco**
**10090 San Raffaele Cimena (Torino) (IT)**

(74) Representative: **Spandonari, Carlo**
**Spandonari & Modiano S.r.l.**
**Corso Duca degli Abruzzi 16**
**10129 Torino (IT)**

(54) **Stereo-image display device for naked-eye vision**

(57) A monitor (M) is driven by video signals to display a composite image comprising alternate vertical sections respectively belonging to the right-hand and left-hand image of a stereoscopic pair (S1, D2, S3, D4, ...). A shutter screen (H) is placed before the monitor, comprising adjacent vertical sections, which are darkened synchronously with the video signal, whereby each eye of a spectator placed before the monitor is alternately allowed to view only the right-hand and left-hand image.

Fig. 2

EP 1 441 540 A2

**EP 1 441 540 A2**

**Description**

This invention is concerned with a stereo-image display device for naked-eye vision.

A number of methods and devices are known for the stereoscopic vision of images. Among the oldest devices are viewers of stereoscopic pairs of slides or printed images, where the left-hand and right-hand images of the pair are individually observable by the respective eyes of the spectator thru respective lens systems. Such devices are awkward, since they require two physically separate images.

Anaglyphs are still widely used, i.e. superposed stereoscopic pairs of images, colored in respective complementary colors, and viewed thru filtering spectacles having lenses tinted in the same colors. Such method, which utilizes color to multiplex both images of the stereoscopic pair, is also suitable for stereoscopic cinematography, but it suffers from a basic drawback that the polychromy of the image, or at least its stereoscopic component, is lost threreby, and, moreover, that special spectacles are required. According to a modern version of this method, the two images of the stereoscopic pair are displayed on a screen with a light polarized with two orthogonal polarizations for each image, respectively. In this case, the spectator has to use spectacles with polarized filters, allowing each eye to see only its intended image. A complete vision in colors is thereby preserved, but the drawback of the need for special spectacles still remains, as well as, in the case of cinematography, the requirement for a screen which will not degrade the polarization.

According to another method, which may be called "time-multiplexing", the two images of the stereoscopic pair are alternately displayed on one video or projection screen, at a rate higher than the persistence of images on the retina, while the spectator looks at the screen thru shutter spectacles (usually LCD) which alternately shut each eye in synchronism with the display of the two images. By this method, stereoscopic images in colors and also in motion can be watched, but the method has the drawback of requiring relatively complex spectacles that must be connected to the image source.

Another suggested method for stereoscopic vision, which might be called "space-multiplexing", provides that the two images of the stereoscopic pair are displayed as interlaced vertical stripes on a screen covered with microprisms aligned with the vertical stripes, so that, due to the refraction of the prisms, only the intended image is displayed to each eye. However, with this method a considerable amount of the screen resolution is sacrificed, since the screen must accommodate at least twice the conventional information content (usually four times or more).

It is now the main object of the invention to provide a stereo-image display device, for images in colors and in motion, which does not require spectacles and which does not adversely affect the screen's resolution.

The above object, as well as other objects and advantages such as will appear from the following disclosure, is attained by the invention by a stereo-image display device for naked-eye vision having the features recited in claim 1.

A preferred embodiment of the invention is described below, with reference to the attached drawings, wherein:

Figure 1 is a diagrammatic representation of a stereoscopic pair of images;

Figure 2 is a partial, schematic plan view of a device according to the invention;

Figure 3 is a view in an exploded, horizontal cross-section of a shutter screen belonging to the device of Figure 2; and

Figure 4 is a block diagram of the inventive device.

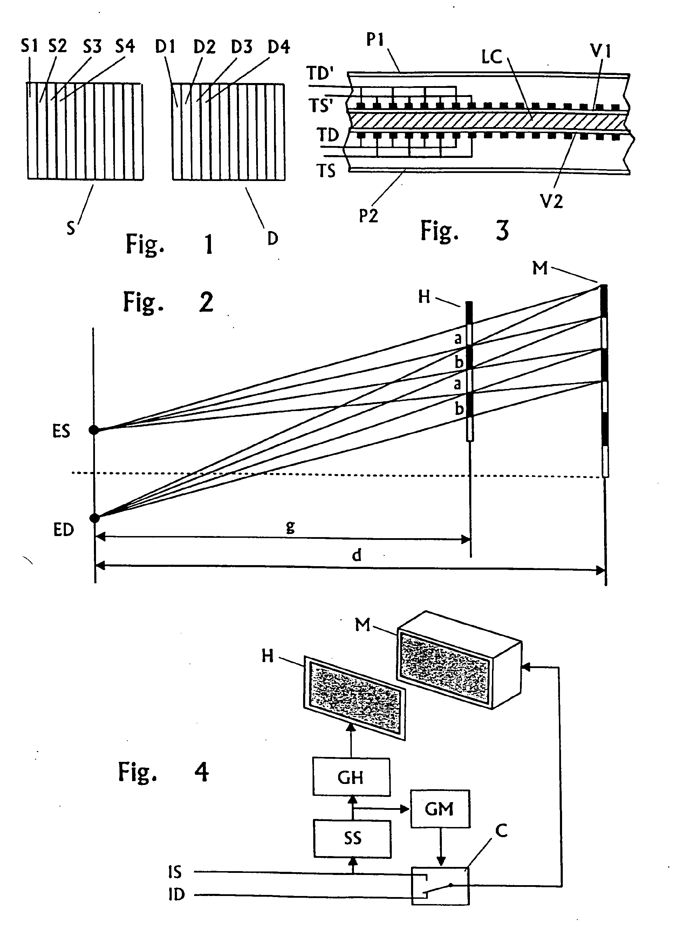

With reference to Figure 1, two images S and D show the same subject shot from two viewpoints at interocular distance so that they may constitute a stereoscopic pair, as known per se. Each of the images is subdivided in sections shaped as thin vertical stripes, S1, S2, S3, ... and D1, D2, D3, ..., respectively. For the sake of clarity of illustration, only fourteen sections are shown in Figure 1, although in practice, as will appear more clearly below, the number of sections is preferably much larger.

Turning now to Figure 2, M schematically indicates a display monitor such as a cathode-ray tube, a liquid-crystal display, or whatever other kind of display that is drivable with electric signals, such as a projector associated with a back-lit video screen, etc. Monitor M is placed at a distance $d$ from the left-hand and right-hand eyes ES e ED of a spectator.

In front of monitor M, at a distance $g$ from the spectator's eyes ES, ED, is arranged a shutter screen H capable of darkening or shutting the passage of light coming from the monitor by alternate vertical stripes or sections "a" and "b".

According to the invention, monitor M is driven, by means best detailed below, by a video signal such that the monitor will display a composite image comprising adjacent vertical sections S1, D2, S3, D4, ..., i.e. a succession of sections alternately drawn from the two images S and D.

As can be seen on the diagram of Figure 2, if the darkened vertical sections on screen H are chosen in appropriate numbers, sizes and geometrical relation with respect to the composite image formed on monitor M, the spectator's left-hand eye can be made to see only sections S1, S3, ... of the left-hand image, while the right-hand eye ED will only see sections D2, D4, ... of the right-hand image. Therefore the spectator will have, as known per se, a stereoscopic perception of the displayed image.

More exactly, as far as the monitor is concerned, the composite image imm(x, y) as a function of position x, y on the monitor turns out to be:

$$imm(x,y) = p_m(x,y)*S(x,y) + (1-p_m(x,y))*D(x,y)$$

where:

S      is the left-hand image;
D      is the right-hand image;
$p_m$      is the visibility distribution associated with monitor M, and is defined as shown below:

$$p_m(x,y) = p_m(x) = \sum_{i=\frac{-N}{2}}^{\frac{N}{2}-1} G(x-2i\Delta s, 2i\Delta s) \qquad (1)$$

where:

$N$      is the number of sections composing the image, assumed even;
$\Delta$      is the width of the sections of monitor M;
$G$      is the "unit gate distribution", defined as:
    $G(k,m) = $      0      $(k < 0)$
                1      $(0 \, ? \, k < m)$
                0      $(m \, ? \, k)$

As far as shutter screen H is concerned, the transparence distribution on it should comply with the following covering and contiguity conditions.

The *covering condition* is that the individual section of screen H (shown with "a" and "b" on Figure 2) covers the associated section of the composite image on monitor M, and can be expressed as follows:

$$\frac{\Delta s}{\Delta g} = \frac{d}{g}$$

where $\Delta$ is the width of the sections of composite image on the monitor.

The *contiguity condition* is that the sections of the composite image associated with the left-hand eye and those associated with the right-hand eye are contiguous:

$$\frac{e}{d} = \frac{\Delta g}{d - g}$$

where *e* is the distance between the spectator's eyes.

The transparency distribution $p_h$ of screen H is univocally determined by the The transparency distribution $p_h$ of screen H is univocally determined by the visibility distribution $p_m$, suitably scaled in size, according to the above-written covering distribution. In other words, the width of the sections is:

$$\Delta g = \frac{g}{d} = \Delta s$$

The above-described configuration is capable of selectively transferring left-hand and right-hand information to the respective eye, but, since the opaque areas of the shutter screen H stops the view of 50% of the surface for each eye, a loss of information will ensue.

Accordingly, in order to avoid, on the one hand, an information loss, and, on the other hand, the annoying presence of an opaque grid, the invention provides that each stereoscopic pair is displayed on the monitor in two successive frames, thereby implementing a sort of time-multiplexing. This is obtained by driving monitor M so that it will display, in a first frame, a first image so defined:

$$imm(x,y) = p_m(x,y)*S(x,y) + (1-p_m(x,y))*D(x,y) \tag{2}$$

and, in the subsequent frame, a second composite image so defined:

$$imm(x,y) = p_m(x,y)*D(x,y) + (1-p_m(x,y))*S(x,y) \tag{3}$$

At the same time, the above defined $p_h$ is used as transparency distribution $p_h$ for the shutter screen H, in the first frame, and its complementary $1 - p_h$ in the subsequent frame.

It will be easily seen that, by exploiting the persistence of the retina, each eye will thereby perceive the entire image destined to it (left-hand or right-hand) without any loss of information, and without an opaque grid.

The number of sections and the distance between the monitor and the shutter screen can change depending on the distance of the spectator from the monitor and from the size of the latter; however, in practice, for a monitor with 50 cm diagonal, the number of sections may be of the order of one hundred and the monitor-to-screen distance may be of the order of 5 cm.

Although the above-described arrangement could, in principle, be implemented by several techniques, the preferred embodiment of the invention provides that the shutter screen H comprises, as shown on Figure 3, a light-polarization-rotating layer of liquid crystals LC, sandwiched between two parallel, transparent glass plates V1, V2. This sandwich is interposed between two linearly polarizing plates P1, P2, which polarize light along two directions at right angles to each other. Glass plates V1 and V2 are metallized by adjacent vertical stripes which are alternately connected to one of two terminals TD, TS and TD', TS'. The liquid crystals may be chosen substantially arbitrarily, but they should have a very high switching rate, because of the high switching frequency.

In the above arrangement, by driving terminals TD, TS, TD', TS' with respective square-wave signals in phase opposition, and synchronized with the alternance of the image sections on monitor M according to the above-described rules, the result is achieved that the liquid-crystal panel will rotate the light polarization alternately by 90° at the alternate vertical stripes "a" and "b", so that they will be selectively darkened and will allow the eyes of the spectator alternately only the vision of the pertinent image sections.

Figure 4 is a block diagram of preferred circuitry for implementing the above-described operation for both the monitor and the shutter screen. The two images, left-hand and right-hand, of the stereoscopic pair are assumed applied at the inputs IS and ID of an electronic switch C, in the form of conventional analog video signals, e.g. in the PAL television system. A circuit SS separates the synchronizing pulses from one of the video signals and supplies a grid-alternance signal, for the control of a first pattern generator GM which generates switching commands for electronic switch C according to relations (2) e (3), so that the mutually synchronous, left-hand and right-hand video signals are multiplexed by switch C and fed to monitor M. A similar pattern generator GH creates the grid transparency of shutter screen H according to relation (1) and its complementary. The grid alternance signal is obtained, for instance, by halving the frame frequency by means of a common type-C flip-flop (not shown).

It will be understood that the circuitry of Figure 4 builds each successive frame by utilizing, in equal parts, both frame signals IS and ID, thereby omitting 50% of the information of each of them. Where the images are static or in slow motion, the loss of information is negligible, since whatever is lacking in even frames will appear in the odd frames, and vice versa. However, loss of information can be avoided by applying the same stereoscopic image (i.e., the same pair of images) twice in succession to switch C, obviously with doubled frame frequency. In this way, each successive pair of images is sampled twice in succession, the entire information being displayed in two successive frames. A person skilled in the art can easily implement this operation, by merely connecting respective up-converters (not shown), i.e. frame-frequency doublers, in front of the signal inputs of switch C.

Although, for the sake of simplicity, conventional analog television signals have been mentioned thruout, a person skilled in the art will understand that the same principles are applicable to any kind of video signal, be it analog or digital.

Implementing the above-described circuit means clearly lies within the ability of any person skilled in the art from the teachings given above.

**Claims**

1. A stereo-image display device for naked-eye vision, **characterized in that** it comprises:

   - a monitor drivable to display flat images;

   - a shutter screen having a first and a second interlaced sets of adjacent vertical sections, placed before the monitor at a predetermined distance, and drivable to make each of said two sets of sections alternately opaque or transparent; and

   - a video-signal generator, connected to display a composite image comprising a first and a second sets of alternate vertical sections respectively drawn from a right-hand and as left-hand stereoscopic images on the monitor and for synchronously driving said shutter screen to make said first and second sets of alternate sections respectively opaque and transparent.

2. The device of claim 1, **characterized in that** said video signal generator is capable of displaying, in two successive frames, a first and a second composite images, whereby the first and the second sets of vertical sections are drawn from said two stereoscopic images in inverted order, and of driving said shutter screen to make said first and second sets of alternate sections respectively opaque and transparent in correspondingly inverted order.

3. The device of claim 1 or 2, **characterized in that** said video signal generator is capable of driving said monitor to display a succession of composite images forming a cinematographic sequence.

4. The device of any of claims 1 to 3, **characterized in that** said vertical sections of the composite image all have equal width.

5. The device of claim 4, **characterized in that** the vertical sections of the shutter screen all have equal width.

6. The device of claim 5, **characterized in that** said vertical sections of the screen have a width proportional to the width of the sections of the composite image by a factor corresponding to the ration between the distances of the spectator's eye from the shutter screen and from the monitor, respectively.

7. The device of any of claims 1 to 6, **characterized in that** the number of said vertical sections of the composite image on the monitor is in the order of one hundred.

8. The device of any of claims 1 to 7, **characterized in that** said shutter screen is a liquid-crystal panel sandwiched between two polarizer plates in quadrature to each other.

9. The device of any of claims 1 to 8, **characterized in that** said video signal generator comprises:

   - an electronic switch having two inputs for receiving respective television signals defining the left-hand and right-hand images of the stereoscopic pairs and having a monitor-driving output;

   - a first pattern generator for generating switching commands for the electronic switch;

   - a second pattern generator for generating switching commands for the shutter screen;

   - a synch separator of the synchronizing pulses from one of the two televions signals, controlling said first and said second pattern generator.

10. The device of claim 9, **characterized in that** it further comprises respective frame-frequency doublers (up-converters) connected upstream of each input of said electronic switch.

Fig. 1

Fig. 3

Fig. 2

Fig. 4